# EUROPEAN PATENT SPECIFICATION

(11) **EP 0 702 743 B1**
(45) Date of publication and mention of the grant of the patent: **16.12.1998**
(21) Application number: 93908216.0
(22) Date of filing: 22.03.1993
(51) Int. Cl.: E04B 1/88, E04C 2/26, E04B 2/86

(54) **WALL FOR A BUILDING, METHOD FOR ERECTING SUCH A WALL AND ELEMENT THEREFOR**
GEBÄUDEWAND, VERFAHREN ZUM ERRICHTEN EINER SOLCHEN WAND UND ELEMENT HIERFÜR
MUR DE BATIMENT, SON PROCEDE ET SES ELEMENTS DE CONSTRUCTION

(30) Priority: 12.05.1992 SE 9200889
(43) Date of publication of application: 27.03.1996
(73) Proprietor: ERICSSON, Roger, 745 34 Enköping (SE)
(72) Inventor: ERICSSON, Roger, 745 34 Enköping (SE)
(86) International application number: SE9300236
(87) International publication number: WO9323632

(56) References cited:
- AT-B- 292 979
- AT-B- 324 637
- SE-B- 453 411
- US-A- 3 841 051

## Description

The present invention relates, in a first aspect, to a wall intended for a building and composed of building elements of the type comprising at least one first, heat-insulating sheet of a non-yielding material serving to form, together with at least one second board, a heat-insulating and sound-absorbing barrier between the inside and the outside of the completed wall.

In a second aspect, the invention relates to a method for erecting external walls of buildings and, in a third aspect, it relates to a building element for erecting such walls.

### Prior-Art Technique

It is known to prefabricate comparatively lightweight building elements which are provided with cavities and which, after mounting in the frame of a building, are supplemented with an in situ filling, for example in the form of concrete or lightweight concrete, such as foamed concrete. Prior-art building elements of this type consist of two sheets of cellular plastic which are interconnected by means of glued concrete blocks serving as spacers for separating the cellular plastic sheets. This element suffers, however, from a number of drawbacks. Thus, the cellular plastic must be of high density and quite thick to prevent the sheets from breaking during the casting of concrete. At the same time, the insulation requirements on the markets where the product has its greatest potential are small, implying that it would per se be sufficient to have only one foamed concrete part. Moreover, there is no reinforcement of the foamed concrete cast in the cavities of the elements; instead the thickness of the foamed concrete must be considerable to allow the core of foamed concrete to carry the load involved, which further increases the loads to which the cellular plastic sheets are subjected. It is per se conceivable to remove to some extent the weakness of the cellular plastic sheets by inserting a greater number of spacer blocks, but this leads to increased weight and unwieldiness. Another technique of trying to remedy the deficiencies of this prior-art building element is to fix by gluing, before the casting of concrete, an additional rigid sheet on top of one cellular plastic sheet. However, this leads to other problems, as in most cases a sheet on the outside of the element is unnecessary, since the outside is usually to be plastered. Besides, gluing in situ is a difficult operation which is preferably made at the factory. However, the problems cannot be avoided completely, since there will always be a general joint which may leak and constitute a weakness in the wall during casting. If the wall is to be covered with brick instead of plaster, the brick coating must in many cases be attached to the frame by mechanical means. The prior-art element makes it difficult to carry out such attachment.

### Objects and Characteristic Features of the Invention

The present invention aims at eliminating the abovementioned drawbacks of prior-art building elements and of walls composed of these building elements, and creating opportunities for smooth and easy as well as economical erection of external walls by means of prefabricated building elements. A fundamental object of the invention thus is to eliminate the glued concrete blocks used in known building elements, and to replace them with spacers which makes the building element considerably more rigid. A further object is to create flexibility in the casting of the casting material with regard to the possibilities of integrating, into different sections of the wall, portions having different functions.

These objects are achieved by means of the features defined in the accompanying independent claims.

By replacing, according to the invention, the glued concrete blocks in prior-art, prefabricated building elements by elongate sectional elements, for example made of steel, a great number of advantages are obtained. The sectional elements have a considerable length and consequently stiffen the boards when glued or connected in some other manner to the sectional elements. In practice, the sectional elements are provided with flanges which afford an increase of the adhesion surfaces and, thus, the strength of the boards during casting. At the same time, the weight of the sectional elements of e.g. steel is lower than that of the corresponding number of concrete blocks, thereby reducing the loads to which the building element is subjected when transported and handled. Since moreover the sectional elements can absorb considerable loads, the thickness of e.g. a foamed concrete core may be reduced, which results in further reduction of the strain to which the cellular plastic sheet or sheets are exposed. In order to further reinforce the completed building element, the web of the sectional elements can be perforated or punched to have lips such that foamed concrete or any other castable filling material can spread and catch the perforations or punched parts. The sectional elements may be offset such that the flanges engage different parts of the sheets. A further great advantage of elongate, erect sectional elements is that it will be possible to cast separate columns in the wall for absorbing concentrated loads. It is also possible to leave some box-shaped spaces completely free from foamed concrete or any other cast filling if such filling is not considered to be absolutely necessary. Moreover, a reinforcement, more precisely a horizontal reinforcement, may be arranged in the wall layer cast in situ.

### Further Description of Prior Art

A prefabricated building element is per se disclosed by SE 8203312-7 (Publ. No. 453,411), said building element being composed of two boards which are separated by means of erect sectional elements and between which are defined box-shaped spaces into which concrete can be cast after mounting of the element. However, this element is not provided with any heat-insulating sheet, thereby necessitating extensive and expensive supplementary work in the form of application of special heat insulation and the associated covering.

### Brief Description of the Accompanying Drawings

In the drawings
- FIG. 1: is a perspective view of a building element according to the invention,
- FIG. 2: is an enlarged horizontal sectional view of a portion of the element in Fig. 1,
- FIG. 3: is a similar horizontal sectional view of the end portions of two neighbouring building elements according to the invention,
- FIGS 4-7: are further horizontal sectional views of some alternative embodiments of the invention,
- FIG. 8: is a vertical sectional view of a portion of a wall for a building, connecting with a horizontal concrete slab,
- FIGS 9 and 10: are further horizontal sectional views of alternative embodiments of the invention, and
- FIG. 11: is an enlarged, partly cut-off horizontal sectional view of a further embodiment of the invention.

### Detailed Description of Preferred Embodiments of the Invention

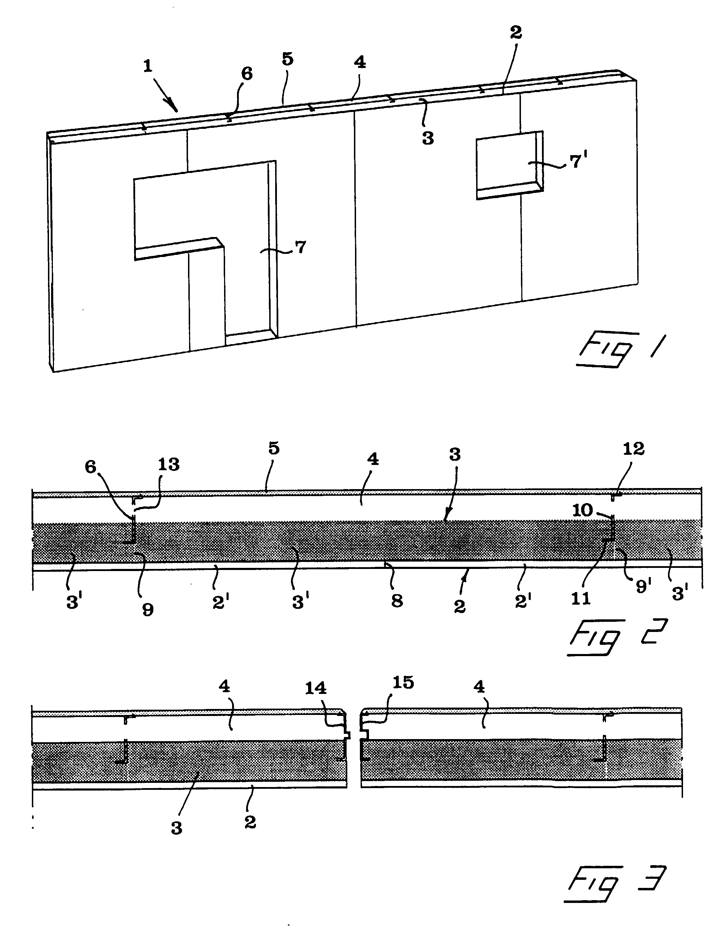

Fig. 1 illustrates a prefabricated building element 1 according to the invention, which, as seen from the exterior of the element, comprises a first covering board 2, a heat-insulating sheet 3, an empty space 4, and a second internal covering board 5 which constitutes the internal covering of the element. Moreover, the building element includes a number of sectional elements, preferably made of metal (such as steel or aluminium), which are generally designated 6. The building element may, but need not be formed with one or more door and/or window openings 7, 7'. In practice, the element 1 may have a height of 2.4-3.0 m, i.e. the conventional ceiling height in dwelling houses, whereas the length may vary to a considerable extent. However, in practice the length usually is in the range of 6-10 m, preferably about 8 m.

The continuous heat-insulating sheet designated 3 can be made of a plurality of sheets 3' arranged edge-to-edge (see Fig. 2), whose width is considerably smaller than the total length of the element 1. The sheets 3' are preferably made of cellular plastic, although it is per se possible to use other types of lightweight porous sheets which are rigid and also have excellent heat insulation power. Thus, in addition to cellular plastic, use can be made of mineral fibre sheets having a rigid structure. In practice, the individual sheets 3 can have a width of 600 mm and a length corresponding to the height of the element 1, i.e. 2.4-3.0 m. Analogously, the external covering board 2 is in this case composed of a plurality of boards 2', arranged edge-to-edge, which may consist of e.g. composite material, sheet metal or like material. These boards 2' advantageously have a width which is twice the width of the heat-insulating sheets 3', i.e. in practice 1200 mm. The boards 2' and the sheets 3' are permanently connected to each other by gluing. Since the boards are arranged to overlap each other, i.e. a joint 8 between two boards 2' being positioned midway between two analogous joints 9, 9' between neighbouring heat-insulating sheets 3', a highly rigid board unit is obtained by means of the gluing.

In this context it may also be mentioned that the internal board 5, which serves as a base for wallpaper or the like, can be composed of a single layer or, alternatively, two layers of for instance gypsum panels arranged one upon the other and connected by gluing. It should also be pointed out that the internal covering or base board 5 as well as the external board 2 can also be made as a single continuous unit in the form of a board having the same height and length as the completed building element. Possibly, a thin cellular plastic sheet (not shown) can be attached to the side of the board 5 facing the box-shaped spaces 4.

In the shown embodiment, the sectional elements 6 which are preferably made of metal are essentially Z-shaped sections comprising a central web 10, an inner flange 11 and an outer flange 12. The two flanges 11, 12 extend essentially perpendicular to the web 10 and, in the Z-shaped embodiment, in opposite directions from the web (it is also conceivable to use U-sections, whereby the flanges extend in the same direction from the web 10). To attach the individual sectional element 6 to the heat-insulating sheet 3, a groove is formed in one longitudinal side edge of each sheet 3', in which groove the outer flange 11 of the section can be inserted. In practice, the sectional element 6 can be made of very thin metal sheeting, e.g. steel sheet having a thickness of 1 mm or even less (0.5-0.7 mm). The groove in the terminal edge of the sheet 3' is then suitably formed with a thickness not exceeding the sheet thickness of the sectional element 6, whereby the flange 11 will be pressed into the respective groove with a close-running fit. Also the flanges are possibly glued to the corresponding contact surfaces of the sheets. When the boards 2 and the sheets 3 are glued together in the manner described above, the individual sectional elements 6 will be secured to and integrated with the sheet 3 in a firm and strong manner, whereby adequate rigidity is given to the sectional elements despite their comparatively small dimensions. As is evident from the drawing, a sectional element 6 is applied to each of the joints 9, 9' etc. between neighbouring sheets 3', which results in the building element in its entirety containing a plurality of sectional elements which are spaced apart a distance corresponding to the width of the individual sheets 3'. In this manner the box-shaped spaces 4 are formed between neighbouring sectional elements and the heat-insulating sheet 3. The covering board 5 can readily be attached to the inner flanges 12 of the sectional elements 6, for example by gluing. As covering board 5, use can be made of many different board materials.

For the purpose of stabilising the completed wall, the box-shaped spaces 4 are, according to the invention, filled with lighweight concrete which may be aerated concrete, foamed concrete or lightweight filler concrete. The density may be in range of 300-1700 kg/m³ or 500-1300 kg/ m³, and most advantageously use is made of precisely foamed concrete. To facilitate complete filling of all the box-shaped spaces, the portions of the webs of the sectional elements, which project from the outside of the heat-insulating sheet 3, can be formed with openings 13 which allow the lightweight concrete to creep from one box-shaped space to the other.

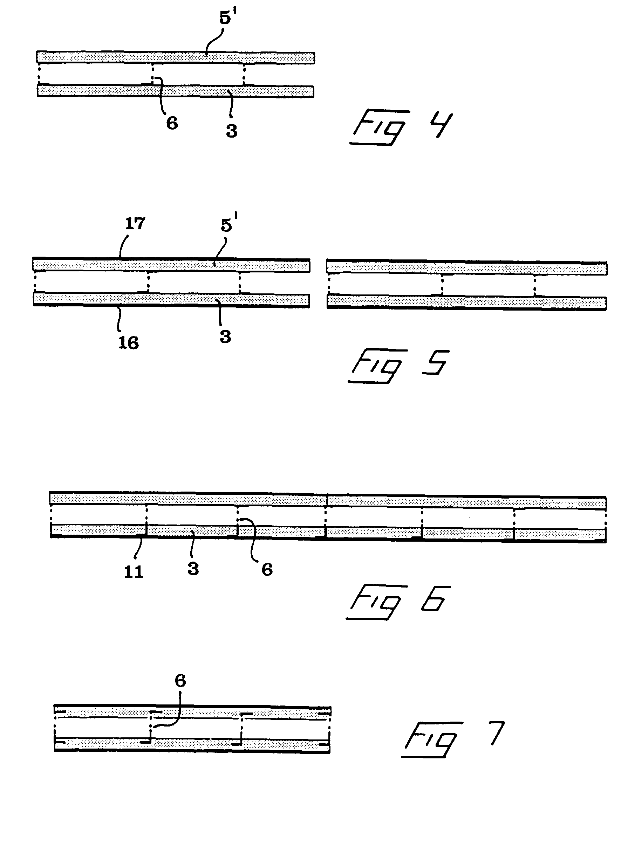

Fig. 3 illustrates how the building element 1 can be provided, at its opposite, vertical terminal edges, with special sectional elements 14, 15, of which the first-mentioned is formed with a projecting tongue adapted to fit into a corresponding groove in the sectional element 15.

According to the invention, the building elements are supplied from the factory as prefabricated semi-manufactures with empty box-shaped spaces 4. In this state, the building elements are extremely light and, thus, smooth and easy to transport and handle. The building elements thus supplied as semi-manufactures are mounted in situ side by side and stacked on each other, more precisely in one common vertical plane connecting with the infill openings of the frame of the house. It is possible to keep both the upper and the lower portions of the box-shaped spaces 4 open, thereby forming an open through gap between the uppermost and lowermost building element of the face of the house. Subsequently this gap is filled with lightweight concrete, especially foamed concrete, which after curing forms a through slab of high rigidity and stability, standing on the base in question. Since the thus cast lightweight concrete slab extends through the entire face, high density will be obtained, which, together with the fact that the lightweight concrete has considerably higher density than mineral wool mats, results in excellent strength of the completed wall.

In this context it should be mentioned that it is per se possible to cast merely one storey at a time, i.e. fill the spaces 4 in a one storey-high element and let the lightweight concrete cure before casting the next storey.

Fig. 4 illustrates an alternative embodiment in which the boards 3, 5' both are cellular plastic sheets. They are interconnected by means of sectional elements 6 which can either be Z shaped or U shaped. In both cases, the flanges 11 and 12, respectively, are glued to the inside of the cellular plastic sheets. Also in this case, the sectional elements 6 are formed with openings through which the lightweight concrete may pass and spread during the casting.

Fig. 5 shows a similar embodiment in which the two cellular plastic sheets are, however, supplemented with both external and internal panels 16 and 17, respectively. The internal panel 17 may consist of overlapping gypsum panels, whereas the external panel 16 may consist of e.g. metal sheet, wood, plastic or a thin, for instance fibre-reinforced, concrete layer.

The embodiment shown in Fig. 6 distinguishes from the one in Fig. 5 only by the sectional elements 6 being embedded and secured to one cellular plastic or heat-insulating sheet 3, more precisely in such a manner that the flange 11 is placed immediately inside the external panel (or the internal one, if the sectional elements are secured to the opposite cellular plastic sheet).

Fig. 7 illustrates an embodiment in which the two flanges of the sectional elements 6 are each secured in one cellular plastic or heat-insulating sheet, the individual flange being located in some suitable place between the outside and inside of the individual sheet.

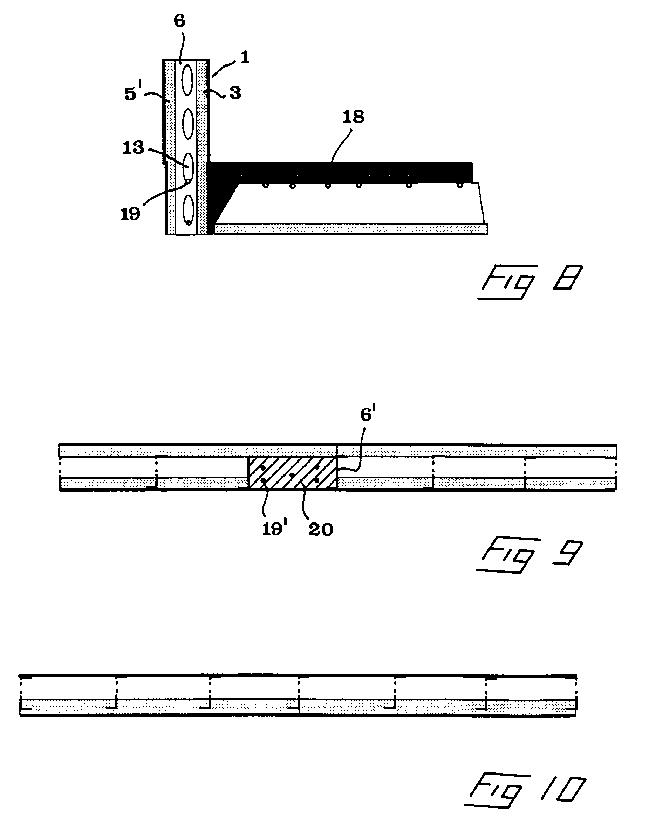

Fig. 8 illustrates an embodiment in which the building element 1 is arranged in connection with a horizontal concrete slab 18. This embodiment constitutes an extremely simple solution to the problem with plinths. Furthermore, the Figure illustrates how horizontal reinforcing bars can be arranged in the openings 13 in the erect sectional elements 6.

Fig. 9 illustrates how a column 20 can be easily cast in at least one box-shaped space in the individual building element. To this end, use is made, in connection with the individual box-shaped space or spaces, of sectional elements 6' which have no openings and therefore are able to define the box-shaped space towards neighbouring box-shaped spaces. Moreover, in the illustrated embodiment the outer cellular plastic sheet has been removed such that the box-shaped space extends up to the external panel. The column can preferably be reinforced by means of vertical reinforcing bars 19'.

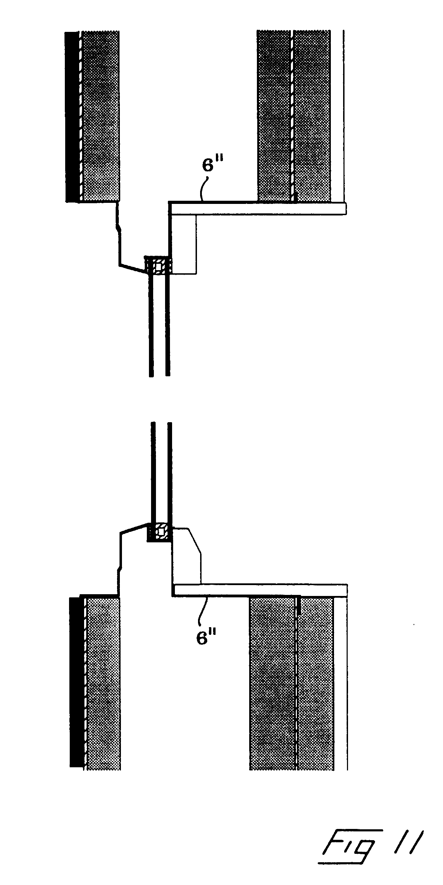

Fig. 10 illustrates a further embodiment in which the building element comprises only one cellular plastic or heat-insulating sheet, the sectional elements projecting therefrom being connected at their opposite edges to a single panel having no heat-insulating power. On the opposite side of the cellular plastic sheet, i.e. the outside of the building element, there is arranged a further, stiffening panel.

Finally, Fig. 11 illustrates an embodiment in which the sectional elements 6", made of e.g. steel or aluminium, can be used in an advantageous manner to directly form window frames. A previous problem occurring in prefabrication of walls was caused precisely by window deliveries. In most cases, the delivery of window frames affects the delivery times. This problem is eliminated in the embodiment shown in Fig. 11, in which the frame of the window constitutes a part of the wall in the building element having its own stability. Thus, the frame may consist of a specially designed steel section which at the same time defines the box-shaped space into which the casting material is filled. In this way, the necessary frame construction is already completed as the described building element is prefabricated at the factory, i.e. there is no wait for deliveries of windows.

### Feasible Modifications of the Invention

The invention is, of course, not restricted merely to the embodiment described above and illustrated in the drawing. Thus, it is possible to arrange the heat-insulating sheet 3 adjacent the internal board 5. In this case, the individual heat-insulating sheets thus are connected to the internal board by gluing, while forming a rigid board unit, at the same time as the external covering or base board 2 is directly or indirectly attached to the projecting sectional elements now facing away from the heat-insulating sheet. Also in this case, the external board 2 may be composed of either a single layer or two or even a plurality of layers applied one on top of the other.

## Claims

1. Wall for a building, composed of building elements of the type comprising at least one first, heat-insulating sheet (3) of a non-yielding material, which serves to form, together with at least one second board (2, 5), a heat-insulating and sound-absorbing barrier between the inside and the outside of the completed wall, **characterised** in that elongate sectional elements (6) are connected to the heat-insulating sheet (3), each of said sectional elements projecting a distance from one side of said heat-insulating sheet (3), thereby forming, between the portions of neighbouring sectional elements, which project from the heat-insulating sheet, box-shaped spaces (4), and that at least some of the box-shaped spaces (4) defined between said heat-insulating sheet (3), said second board (5) and neighbouring sectional elements (6) are filled with lightweight concrete, for instance aerated concrete, foamed concrete or lightweight filler concrete.

2. Method for erecting external walls of buildings by means of building elements comprising at least one first, heat-insulating sheet (3) of a non-yielding material, which serves to form, together with at least one second board (2, 5), a heat-insulating and sound-absorbing barrier between the inside and the outside of a completed wall, elongate sectional elements (6) being connected to said heat-insulating sheet (3), each sectional element projecting a distance from one side of said heat-insulating sheet (3), thereby forming, between the portions of neighbouring sectional elements, which project from said heat-insulating sheet, box-shaped spaces (4), **characterised** in that said building elements are mounted in situ in the face of a house frame, said box-shaped spaces (4) being empty, whereupon at least some of the box-shaped spaces (4) are filled with lightweight concrete, for instance aerated concrete, foamed concrete or lightweight filler concrete.

3. Method as claimed in claim 2, **characterised** in that one or more of said box-shaped spaces are filled with a material, especially concrete, such as reinforced concrete, thereby forming load-carrying columns inside the completed wall.

4. Building element for external walls of buildings, comprising at least one first heat-insulating sheet (3) of a non-yielding material serving to form, together with at least one second board (2, 5), a heat-insulating and sound-absorbing barrier between the inside and the outside of a completed wall, **characterised** in that elongate sectional elements (6) are connected to said heat-insulating sheet (3), each sectional element projecting a distance from one side of said heat-insulating sheet (3), thereby forming, between the portions of neighbouring sectional elements, which project from the heat-insulating sheet, box-shaped spaces (4), and that said box-shaped spaces (4) defined between said heat-insulating sheet (3), said second board (5) and neighbouring sectional elements (6) are empty and adapted to be filled with lightweight concrete, for instance aerated concrete, foamed concrete or lightweight filler concrete.

5. Building element as claimed in claim 4, **characterised** in that the individual sectional element (6) is connected to said boards by means of a glue joint.

6. Building element as claimed in claim 4 or 5, **characterised** in that the individual sectional element forms, at least partly, a fixed frame for a window or a door.

## Patentansprüche

1. Mauer für ein Gebäude, welche aus Bauelementen besteht, die derart gestaltet sind, dass sie aus mindestens einer ersten värmeisolierenden Platte (3) aus formstiefem Material bestehen, die dazu dient, zusammen mit zumindest einer zweiten Platte (2, 5) eine värmeisolierende und schallabsorbierende Barriere zwischen der Innenseite und der Aussenseite der fertigen Mauer zu bilden, die **dadurch charakterisiert** ist, dass rechteckige Profilelemente (6) mit der värmeisolierenden Platte (3) verbunden sind, wobei jedes der genannten Profilelemente in einem gewissen Abstand von der einen Seite der värmeisolierenden Platte (3) heraussteht, um zwischen den von der värmeisolierenden Schicht herausstehenden Partien der nahebei befindlichen Profilelemente Fächer (4) zu bilden und dass zumindest einige gewisse dieser Fächer, die abgegrenzt werden zwischen der Wärmeisolierungsplatte (3), besagter anderen Platte (5) und nahebelegenene Profilelementen (6) mit Leichtbeton, z.B. Gasbeton, Schaumbeton oder leichtem Füllbeton, gefüllt werden.

2. Methode zur Errichtung einer Aussenmauer für Gebäude mit Bauelementen, die aus mindestens einer ersten värmeisolierenden Platte (3) aus formstiefem Material bestehen, die dazu dient, zusammen mit zumindest einer zweiten Platte (2, 5) eine värmeisolierende und schallabsorbierende Barriere zwischen der Innenseite und der Aussenseite der fertigen Mauer zu bilden, wobei rechteckige Profilelemente (6), die jedes in einem gewissen Abstand von der einen Seite der värmeisolierenden Platte (3) herausstehen, mit benannter wärmeisolierender Platte (3) verbunden sind, wobei sie mit Teilen der benachbarten Profilelemente, die von besagter wärmeisolierender Platte herausragen, fachähnliche Räumlichkeiten (4) bilden, **die dadurch charakterisiert** sind, dass besagte Bauelemente in situ in die Fassade eines Hauses montiert werden, wobei besagte fach ähnliche Räumlichkeiten (4) leer sind, woraufhin zumindest einige der fachähnlichen Räumlichkeiten (4) mit Leichtbeton, z.B. Gasbeton, Schaumbeton oder leichtem Fllbeton gefüllt werden.

3. Methode, wie in 2) dargestellt, **die dadurch charakterisiert** ist, dass eine oder mehrere der besagten fachähnlichen Räumlichkeiten mit Material, besonders Beton, wie z.B. armiertem Beton, gefüllt werden, wodurch lasttragende Säulen innerhalb der kompletten Mauer gebildet werden.

4. Bauelement für Aussenwände von Gebäuden, die aus zumindest einer ersten värmeisolierenden Platte (3) bestehen, die dazu dient, zusammen mit einer zweiten Platte (2, 5) eine värmeisolierende und schallabsorbierende Barriere zwischen der Innenseite und der Aussenseite einer fertigen Mauer zu bilden, **die dadurch charakterisiert** wird, dass rechteckige Profilelemente (6), mit der värmeisolierenden Platte (3) verbunden werden, wobei jedes der rechteckigen Profile in einem gewissen Abstand von der einen Seite der besagten värmeisolierenden Platte (3) herausragt, wodurch zwischen Teilen der benachbarten Profilelemente, die von der värmeisolierenden Platten (3) herausstehen, besagte fachähnliche Räumlichkeiten entstehen, die, begrenzt von besagter wärmeisolierende Platte (3) besagter zweiten Platte (5) und benachbarten Profilelementen, leer sind und dafür vorbereitet, mit Leichtbeton, z.B. Gasbeton, Schaumbeton oder leichtem Füllbeton gefüllt zu werden.

5. Gebäudeelemente, wie unter 4) beschreiben, **die dadurch charakterisiert** ist, dass besagte individuellen Profilelemente (6) an besagte Platten mittel Kleber miteinander verbunden werden.

6. Gebäudeelemente, wie unter 4) oder 5) beschreiben, **die dadurch charakterisiert** ist, dass die individuellen Profilelemente, zumindest teilweise, einen festen Rahmen für ein Fenster oder eine Tür bilden.

## Revendications

1. Mur pour un bâtiment composé d'eléments constitutifs du type comprenant au moins une première feuille (3) calorifugeante de matériaux d'une forme rigide, qui sert à former, avec au moins un deuxième panneau (2, 5), une barrière calorifugeante et insonorisante entre l'intérieur et l'extérieur du mur fini, **caractérisé** en ce que des éléments (6) sectionnes allongés sont connectés à la feuille (3) calorifugeante, dont chacun desdits éléments sectionnés projette une distance d'un côté de ladite feuille (3) calorifugeante, de cette façon formant, entre parties d'éléments sectionnés voisins, qui projette dé la feuille calorifugeante, espaces (4) en forme de caisses, et en ce qu'au moins quelques-uns des espaces (4) en forme de caisses délimités entre ladite feuille (3) calorifugeante, ledit deuxième panneau (5) et éléments (6) sectionnés voisins sont remplis de béton léger, par exemple béton cellulaire ou béton léger farine.

2. Procédé pour l'érection des murs extérieurs de bâtiments au moyen d'éléments constitutifs comprenant au moins une première feuille (3) calorifugeante de matériaux d'une forme rigide, qui sert à former, avec au moins un deuxième panneau (2, 5), une barrière calorifugeante et insonorisante entre l'intérieur et l'extérieur du mur fini, des éléments (6) sectionnes allongés étant connectés à ladite feuille (3) calorifugeante, chacun desdits éléments sectionnés projetant une distance d'un côté de ladite feuille (3) calorifugeante, de cette façon formant, entre parties d'éléments sectionnés voisins, qui projette dé ladite feuille calorifugeante, espaces (4) en forme de caisses, **caractérisé** en ce que lesdits éléments constitutifs sont montés sur place dans la façade d'une carcasse de bâtiment, lesdits espaces (4) en forme de caisses étant vides, après quoi au moins quelques-uns des espaces (4) en forme de caisses sont remplies de béton léger, par exemple béton cellulaire ou béton léger farine.

3. Procédé selon la revendication 2, **caractérisé** en ce qu'une ou plus desdites espaces en forme de caisses est remplie de matériaux, particulièrement de béton, comme du béton armé, de cette façon formant de colonnes portant charge à l'intérieur du mur fini.

4. Éléments constitutifs pour des murs extérieurs comprenant au moins une première feuille (3) calorifugeante de matériaux d'une forme rigide, qui sert à former, avec au moins un deuxième panneau (2, 5), une barrière calorifugeante et insonorisante entre l'intérieur et l'extérieur du mur fini, **caractérisé** en ce que des éléments (6) sectionnes allongés sont connectés à ladite feuille (3) calorifugeante, dont chacun desdits éléments sectionnés projette une distance d'un côté de ladite feuille (3) calorifugeante, de cette façon formant, entre parties d'éléments sectionnés voisins, qui projette dé la feuille calorifugeante, espaces (4) en forme de caisses, et en ce que lesdites espaces (4) en forme de caisses délimités entre ladite feuille (3) calorifugeante, ledit deuxième panneau (5) et éléments (6) sectionnés voisins sont vides et adaptés pour être remplis de béton léger, par exemple béton cellulaire ou béton léger farine.

5. Éléments constitutifs selon la revendication 4, **caractérisé** en ce que l'élément (6) constitutif individuel est connecté audits panneaux au moyen d'un joint de colle.

6. Éléments constitutifs selon la revendication 4 ou 5, **caractérisé** en ce que l'élément (6) constitutif individuel forme, au moins partiellement, un dormant de fenêtre ou de porte.
